(19) Europäisches Patentamt
European Patent Office
Office européen des brevets

(11) **EP 1 545 039 B1**

(12) **EUROPEAN PATENT SPECIFICATION**

(45) Date of publication and mention
of the grant of the patent:
**07.11.2007 Bulletin 2007/45**

(51) Int Cl.:
*H04L 1/06* [(2006.01)]    *H04B 1/707* [(2006.01)]
*H04L 25/06* [(2006.01)]

(21) Application number: **03293223.8**

(22) Date of filing: **18.12.2003**

(54) **Method for interpreting transmitted symbols involving a list sphere radius tuning step**

Verfahren zur Kugeldekodierung mit einstellbarem Radius

Méthode de décodage par sphères avec rayon réglable

(84) Designated Contracting States:
**AT BE BG CH CY CZ DE DK EE ES FI FR GB GR
HU IE IT LI LU MC NL PT RO SE SI SK TR**

(43) Date of publication of application:
**22.06.2005 Bulletin 2005/25**

(73) Proprietors:
• **Mitsubishi Electric Information Technology
Centre
Europe B.V.
1119 NS Schiphol Rijk (NL)**
Designated Contracting States:
**FR**
• **MITSUBISHI DENKI KABUSHIKI KAISHA
Chiyoda-ku
Tokyo 100-8310 (JP)**
Designated Contracting States:
**AT BE BG CH CY CZ DE DK EE ES FI GB GR HU
IE IT LI LU MC NL PT RO SE SI SK TR**

(72) Inventors:
• **Brunel, Loic
Mitsubishi Electric Ite
35708 Rennes Cedex 7 (FR)**
• **Gresset, Nicolas
Mitsubishi Electric Ite
35708 Rennes Cedex 7 (FR)**
• **Boutros, Joseph
Ecole Nationale Supérieure
75013 Paris (FR)**

(74) Representative: **Saint-Marc-Etienne, Christophe
Andréas
Cabinet Le Guen & Maillet,
5, place Newquay,B.P. 70250
35802 Dinard Cedex (FR)**

(56) References cited:
**US-A1- 2003 076 890**

• **LUO J ET AL: "Branch-and-bound-based fast
optimal algorithm for multiuser detection in
synchronous CDMA" ICC 2003. 2003 IEEE
INTERNATIONAL CONFERENCE ON
COMMUNICATIONS. ANCHORAGE, AK, MAY 11
- 15, 2003, IEEE INTERNATIONAL CONFERENCE
ON COMMUNICATIONS, NEW YORK, NY : IEEE,
US, vol. VOL. 1 OF 5, 11 May 2003 (2003-05-11),
pages 3336-3340, XP010643064 ISBN:
0-7803-7802-4**
• **BOUTROS, J.; GRESSET, N.; BRUNEL, L.;
FOSSORIER, M.;: "Soft-input soft-output lattice
sphere decoder for linear channels" GLOBAL
TELECOMMUNICATIONS CONFERENCE 2003,
GLOBECOM '03, vol. 3, 1 December 2003
(2003-12-01), pages 1583-1587, XP002279309**

EP 1 545 039 B1

**Description**

The present invention relates to a method for interpreting at least one signal transmitted by means of at least one transmitting antenna and received by means of at least one receiving antenna, which method includes:

. a symbol listing step for producing a list of symbols selected among predetermined. symbols which may potentially be received by means of said at least one receiving antenna, each listed symbol being represented by at least one bit,
. a marginalization step for processing said listed symbols in order to produce at least one probability value to be associated to said at least one bit, and
. a decoding step for refining said at least one probability value by taking into account knowledge pertaining to an encoding scheme used for encoding the received signal, a refined probability value produced in the course of the decoding step being intended to be used as an *a priori* probability value during a subsequent marginalization step.

Such an interpreting method may be used in telecommunication systems in which multiple antennas are used at a receiver end and/or at a transmitter end of a wireless link, which systems are called Multiple Input Multiple Output systems (further referred to as MIMO systems). MIMO systems have been shown to offer large transmission capacities compared to those offered by single antenna systems. In particular, MIMO capacity increases linearly with the number of transmitting or receiving antennas, whichever the smallest, for a given Signal-to-Noise Ratio and under favourable uncorrelated channel conditions. MIMO techniques are thus likely to be used in future wireless systems intended to provide large spectral efficiencies or, alternatively, reduce the transmitting power required for obtaining a spectral efficiency equivalent to that which is obtained in current telecommunication systems. Such MIMO techniques will very likely be combined with multi-carrier modulation techniques like OFDM (standing for Orthogonal Frequency Division Multiplex) and MC-CDMA (standing for MultiCarrier-Code Division Multiple Access) techniques, whose use in future wireless systems is also considered.

A particular type of MIMO systems makes use of a Bit Interleaved Coded Modulation technique, further referred to as BICM, according to which the transmitter includes a channel encoder intended to apply an encoding, e.g. by means of a convolutional code or of a turbo code, to uncoded data bits, and to provide a binary stream to an interleaver. This interleaver will then deliver permutated bits, which are to be divided into word sequences intended to be transformed into a series of coded symbols featuring each a plurality of components, the components of a same symbol being intended to be transmitted during a same time chip by respective transmitting antennas.

Transmitted symbols are to be interpreted on the receiver end, which is usually performed in MIMO systems of the BICM type by means of an iterative space-time interpreting process, which iterative process is intended to produce estimates of the original uncoded data bits on the basis of which the transmitted symbols have been generated. The spatial diversity induced by the use of multiple transmitting and receiving antennas eases such a decoding, since this diversity provides a larger amount of information than that which would be provided by a single signal transmitted through a single communication channel.

Commonly used iterative interpreting methods require an initial creation, during a symbol listing step, of a limited list of symbols to which initial probability values are to be associated during a subsequent marginalization step.

The initial probability value associated with a given listed symbol may for example consist in a metric representing the distance between the given listed symbol and the received symbol. The probability values thus obtained may be refined by making use, in a subsequent decoding step, of additional knowledge pertaining to the encoding scheme which has been used originally for encoding the received signal. The refined probability value produced for each bit belonging to a same set of bits representative of all listed symbols by such a decoding step may then be used, in an *a posteriori* or, preferably, in an extrinsic form from which *a priori* information related to each bit under consideration has been individually removed, for constituting *a priori* information to be taken into account in addition to the above-described metrics during execution of another marginalization step in a subsequent iteration of the iterative interpreting method.

Among various existing symbol listing schemes, a so-called list sphere selecting technique may be used for selecting, among predetermined symbols forming a lattice constellation of symbols which may potentially be received, estimated symbols which may represent a transmitted symbol. A metric representing the distance between the received symbol and a given estimated symbol of the lattice constellation may represent the probability value associated with said estimated symbol. In order to limit the extent of the search for such estimated symbols, only the most likely symbols of the lattice are examined, i.e. those closest to the received symbol, such a limitation being performed by only examining symbols which are included in a sphere having a predetermined radius and centred on the received symbol. Such list sphere selecting schemes have been described in European Patent applications EP 1 215 839 A1 and EP 1 221 773 A1.

The inventors have observed that situations may occur, in which all listed symbols produced by the symbol listing step are such that at least one of the bits representing the listed symbols is invariant from any one listed symbol to another. In other terms, the probability for this bit to have its actual value will be automatically set to 1 at the end of the marginalization step, the probability for this bit to have another value being conversely set to 0.

In such a situation, the probability value will no longer be a soft value intended to be reused in the iterative process and then refined. On the contrary, such an integer probability value will be a non-refineable hard value, indicative of an irrevocable decision and likely to disturb the iterative process and to cause decoding errors.

The invention aims at solving this problem, by providing an interpreting method in which hard probability values resulting from a lack of diversity in the values of the bits representing the listed symbols are prevented from disturbing an iterative process like the one described above.

Indeed, a method according to the opening paragraph is characterized according to a first aspect of the invention in that the symbol listing step involves defining a radius value of a sphere intended to encompass the symbols to be listed, which radius value is chosen such that at least one probability value associated with at least one bit which is invariant among selected symbols located within said sphere is non-integer and higher than a predetermined probability threshold.

The invention aims at preventing the occurrence of integer probability values, and thus at preventing such integer values from producing significant adverse effects on an iterative interpreting process, by trying to ensure *ab initio* that all values of all bits are represented among the population constituted by the symbols selected during the symbol listing step.

Indeed, a tuning of the sphere radius performed as described above will enable to add to the symbols included within said sphere a virtual symbol located at the surface of the sphere, which virtual symbol will be deemed featuring a different value for the at least one bit which is invariant among all listed symbols, when said virtual symbol will be processed simultaneously with said listed symbols in the course of the marginalization step.

According to a particular embodiment of the invention, the selected radius value R is chosen essentially equal to $dc^2+2.\sigma^2.\ln[(1/\varepsilon)-1]$, where dc represents a distance which may separate the center of the sphere from a symbol previously identified as most likely representative of the transmitted symbol, $\sigma^2$ representing a noise variance and $(1-\varepsilon)$ the probability threshold.

In this particular embodiment of the invention, the choice of the value $\varepsilon$ will enable a simple and automatic tuning of the radius value R of the sphere to be used for carrying out the symbol listing step, such a tuning ensuring that the resulting list will be just large enough to include a sufficient number of symbols for the probability value associated to invariant bits representing said symbols to be at least equal to $1-\varepsilon$.

The symbol forming the most likely representative of the transmitted symbol may previously have been identified by performing an initializing step, for example by means of a so-called minimum mean square error technique, or by means of a hard-output sphere decoding technique as described in the above mentioned documents, or according to other known techniques, such as a scheme known to those skilled in the art as the Schnorr-Euchner strategy. Since the main purpose of this initializing step is to provide a hard decision relating to a single symbol instead of soft decisions compiled in a list of estimated symbols with associated likelihood values, the initializing step may be performed quickly and at a relatively low cost in terms of computing power.

According to another particular embodiment of the invention, the selected radius value R is chosen essentially equal to $dc^2+2.\sigma^2.\ln[(Ni/No).((1/\varepsilon)-1)]$, where dc represents a distance which may separate the center of the sphere from a symbol previously identified as most likely representative of the transmitted symbol, $\sigma^2$ representing a noise variance and $(1-\varepsilon)$ the probability threshold, Ni representing a number of virtual symbols also separated from the center of the sphere of radius R by a distance dc, and No representing a number of virtual symbols located at the surface of said sphere.

In this other embodiment of the invention, the choice of the probability threshold $\varepsilon$ will enable a simple and automatic tuning of the radius value R of the sphere to be used for carrying out the symbol listing step, such a tuning ensuring that the resulting list will be just large enough to include Ni virtual symbols for which a given bit has a first value and No virtual symbols for which said given bit has a second, different value, so that the probability value associated to invariant bits representing symbols included in the sphere is at least equal to $1-\varepsilon$.

According to a first variant of the invention, the probability value correction step may further include a substitution step for substituting a predetermined non-integer substitution value for an integer probability value associated to a bit which is invariant from any one symbol listed in said original list to another.

Such a variant of the invention guarantees that no integer probability values will be left free to damage the soft-decision iterative interpreting process described above, since they will automatically be replaced by non-integer values. Though this variant of the invention may be used individually, it will preferably be used cumulatively with one of the embodiments of the invention described above.

The substitution value may for example be chosen equal to $1-\varepsilon$ if the integer probability value is 1 and equal to $\varepsilon$ if the integer probability value is 0, where $\varepsilon$ is a predetermined non-integer value chosen lower than 1/2.

The inventors have observed that decoding means intended to carry out the decoding step may output integer refined probability values, even if all probability values provided to said decoding means are of a non-integer nature. Such situations may occur due to approximations which will be made during the computational process leading to the refined probability values. As already explained above, such non-integer refined probability values may have an adverse impact on the performance of the iterative interpreting process and lead to errors in the interpretation.

According to a second variant of the invention, which may be used alternatively or cumulatively with the above described first variant, a method as described above should thus preferably also include :

. an integer refined probability detection step for detecting situations in which at least one refined probability value produced by the decoding step is an integer value, and
. a thresholding step for replacing such an integer refined probability value by a predetermined non-integer threshold value.

The threshold value may for example be chosen equal to $1-\delta$ if the integer refined probability value is 1 and equal to $\delta$ if the integer refined probability value is 0, where $\delta$ is a predetermined non-integer value chosen lower than 1/2.

According to one of its harware-related aspects, the invention also relates to a telecommunication system including at least one transmitter provided with at least one transmitting antenna and at least one receiver provided with at least one receiving antenna, which receiver includes:

. symbol listing means for producing a list of symbols selected among predetermined symbols which may potentially be received by means of said at least one receiving antenna, each listed symbol being represented by at least one bit,
. marginalization means for processing said listed symbols in order to produce at least one probability value to be associated to said at least one bit, and
. decoding means for refining said at least one probability value by taking into account knowledge pertaining to an encoding scheme used for encoding the received signal, a refined probability value produced in the course of the decoding step being intended to be used as an *a priori* probability value during a subsequent marginalization step,

telecommunication system characterized in that the symbol listing means are designed for computing a radius value of a sphere intended to encompass the symbols to be listed, which radius value is chosen such that at least one probability value associated with at least one bit which is invariant among symbols located within said sphere is non-integer and greater than a predetermined probability threshold.

According to another of its hardware-related aspects, the invention also relates to a communication device provided with at least one receiving antenna and including:

. symbol listing means for producing a list of symbols selected among predetermined symbols which may potentially be received by means of said at least one receiving antenna, each listed symbol being represented by at least one bit,
. marginalization means for processing said listed symbols in order to produce at least one probability value to be associated to said at least one bit, and
. decoding means for refining said at least one probability value by taking into account knowledge pertaining to an encoding scheme used for encoding the received signal, a refined probability value produced in the course of the decoding step being intended to be used as an *a priori* probability value during a subsequent marginalization step,

which communication device is characterized in that the symbol listing means are designed for computing a radius value of a sphere intended to encompass the symbols to be listed, which radius value is chosen such that at least one probability value associated with at least one bit which is invariant among symbols located within said sphere is non-integer and greater than a predetermined probability threshold.

The characteristics of the invention mentioned above, as well as others, will emerge more clearly from a reading of the following description given in relation to the accompanying figures, amongst which:

Fig. 1 is a block diagram showing a highly simplified MIMO telecommunication system in which an interpreting method according to the invention may advantageously be used;
Fig.2 is a diagram showing an original lattice constellation formed by transmitted symbols at a transmitting end and a transformed lattice constellation formed by symbols which may represent the transmitted symbols at a receiving end; and
Fig.3 is a diagram depicting a symbol listing step carried out in an interpreting method according to the invention;

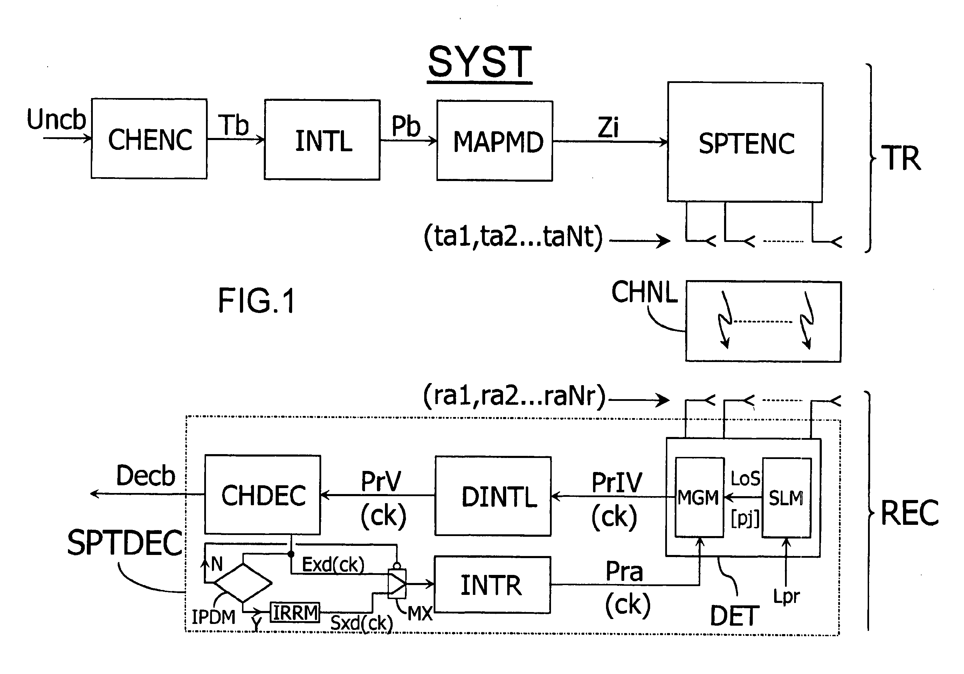

Fig.1 diagrammatically shows a telecommunication system including at least one transmitter TR and one receiver REC, intended to exchange signals through multiple communication channels CHNL established between Nt transmitting and Nr receiving antennas (ta1,ta2...taNt) and (ra1,ra2...raNr), respectively.

The transmitter TR shown in the example depicted here includes a channel encoder CHENC intended to apply an encoding, e.g. by means of a convolutional code or of a turbo code, to uncoded data bits Uncb, and to provide a binary stream Tb to be transmitted. The transmitter TR includes an interleaver INTL intended to generate permutated bits Pb, such an interleaving being useful for a later processing on the receiver side, since it will allow to obtain uncorrelated data. The permutated bits Pb are then divided into sequences of Nt words of at least one bit each, which word sequences are then mapped, i.e. transformed into a series of coded symbols Zi by a mapping and modulation module MAPMD, each symbol Zi then featuring Nt components. Successive symbols Zi are then fed to symbol encoding means essentially formed by a space-time encoder SPTENC, which performs a processing of said symbols Zi before their transmission.

In the known state of the art, the Nt components of each symbol Zi are intended to be transmitted during a same time chip by respective transmitting antennas (ta1,ta2...taNt).

The receiver REC shown in the example depicted here includes a space-time decoder SPTDEC intended to produce decoded data bits Decb which should ultimately correspond to the originally uncoded data bits Uncb. This space-time decoder SPTDEC includes a space-time detector DET intended to process data carried by signals received by means of the receiving antennas (ra1,ra2...raNr), and to produce probability values PrIV(ck) related to bits ck constituting estimates of the transmitted permutated bits Pb.

To this end, the space-time detector DET includes:

. symbol listing means SLM for producing, during a symbol listing step, a list LoS of symbols pj, and

. marginalization means MGM for processing, during a marginalization step, the symbols included in said list LoS in order to produce an interleaved probability value PrIV(ck) to be associated to each of the bits ck belonging to a same set of bits used for representing all symbols pj.

The interleaved probability values PrIV(ck) are intended to be de-interleaved by a de-interleaver DINTL which is to output soft probability values PrV(ck) related to estimates of bits included in the binary stream Tb. Decoding means CHDEC, formed in this example by a channel decoder included in the receiver REC, are intended to generate the decoded data bits Decb on the basis of said probability values PrV(ck). Indeed, these decoding means CHDEC will make use of prior knowledge pertaining to the encoding scheme used by the channel encoder CHENC included in the transmitter TR for encoding the data bits Uncb, which prior knowledge will enable said decoding means CHDEC to refine the probability values PrV(ck) delivered by the space-time detector DET via the de-interleaver DINTL.

According to a looped structure commonly used in the art, the space-time detector DET will make use of *a priori* information Pra(ck) generated for each bit ck in the course of previous decoding steps, and delivered by the decoding means CHDEC in the form of extrinsic information Exd(ck) representative of said refined probability values through an interleaver INTR, which interleaver is identical to the interleaver INTL included in the transmitter TR.

As known from those skilled in the art, an *a posteriori* probability value APP(ck=1) for the kth bit ck to be equal to 1, and an *a posteriori* probability value APP(ck=0) for the kth bit ck to be equal to 0 may respectively be expressed as follows:

$$APP(ck = 1) = \frac{\pi(ck = 1).\sum_{x \in LoS/ck=1} p(y|x).\prod_{l \neq k} \pi(cl = cl(x))}{\sum_{x \in LoS} p(y|x).\prod_{l} \pi(cl = cl(x))},$$

and

$$APP(ck = 0) = 1 - APP(ck = 1),$$

where p(y|x) represents a likelihood for receiving y if it is supposed that x has been transmitted, and π(cl=cl(x)) represents an *a priori* probability that the value of the lth bit cl actually equals that of the lth bit cl of a given symbol x belonging to the list of symbols LoS. During a first iteration of the interpreting process, all *a priori* probability values π(cl=cl(x)) will be set to an initial value, for example a neutral value equal to 1/2.

It should further be observed that π(cl=1)=Pra(cl) and π(cl=0)=1-Pra(cl), Pra(c1) representing an a priori probability value for the value of the lth bit cl to be equal to 1.

An extrinsic probability value for said kth bit ck to be equal to 1, noted XPV(ck=1) and produced by the space-time detector DET in the course of a marginalization step, may thus be expressed as follows:

$$XPV(ck = 1) = \frac{\sum\limits_{x \in LoS / ck=1} p(y|x).\prod\limits_{l \neq k} \pi(cl = cl(x))}{\sum\limits_{x \in LoS} p(y|x).\prod\limits_{l \neq k} \pi(cl = cl(x))} \ ,$$

the use of such extrinsic values for feedback purposes being usually preferred to that of *a posteriori* probability values because an extrinsic value related to a given bit is freed from *a priori* information related to said given bit, which has been used for generating an *a posteriori* value associated with said given bit. In such a case, PrIV(ck)=XPV(ck=1).

During a first iteration of the interpreting process, all *a priori* probability values $\pi(cl=cl(x))$ will be set to an initial value, for example a neutral value equal to 1/2.

As can be seen from the above equation, if, for example, ck= 1 for each symbol x belonging to the list of symbols LoS, the extrinsic probability value XPV(ck=1) produced by the space-time detector DET in the course of the marginalization step will necessarily be equal to 1, which will of course be wrong, since the list of symbols LoS is not exhaustive. Such a non-refineable hard value, indicative of an irrevocable and potentially erroneous decision is likely to disturb the iterative process described above and to cause decoding errors.

According to the invention, the symbol listing means SLM included in the space-time detector DET will define a radius value of a sphere intended to encompass the symbols to be listed, which radius value is chosen such that at least one probability value associated with at least one bit which would be invariant among symbols located within said sphere will be non-integer and greater than a predetermined probability threshold.

According to a variant of the invention, the space-time detector DET will further include substitution means, not shown here, for substituting a predetermined non-integer substitution value for an integer probability value PrIV(ck) associated to any given bit ck which would be invariant from any one symbol listed in the list of symbols LoS to another. This variant of the invention guarantees that no integer probability values will be left free to damage the soft-decision iterative interpreting process described above, since they will automatically be replaced by non-integer values.

The substitution value may for example be chosen equal to 1-$\varepsilon$ if the integer probability value is 1 and equal to $\varepsilon$ if the integer probability value is 0, where $\varepsilon$ is a predetermined non-integer value chosen lower than ½, for example $\varepsilon=10^{-5}$ or $10^{-6}$.

As will be explained hereinafter, programmable listing parameters Lpr will help tailoring the list of symbols LoS to be delivered by said symbol listing means SLM in such a way that said list features a suitable diversity, so that the above described substitution means will only be triggered in exceptional situations where the symbol listing means SLM will have failed to produce a list of symbols LoS offering a sufficient diversity despite all efforts made in this purpose.

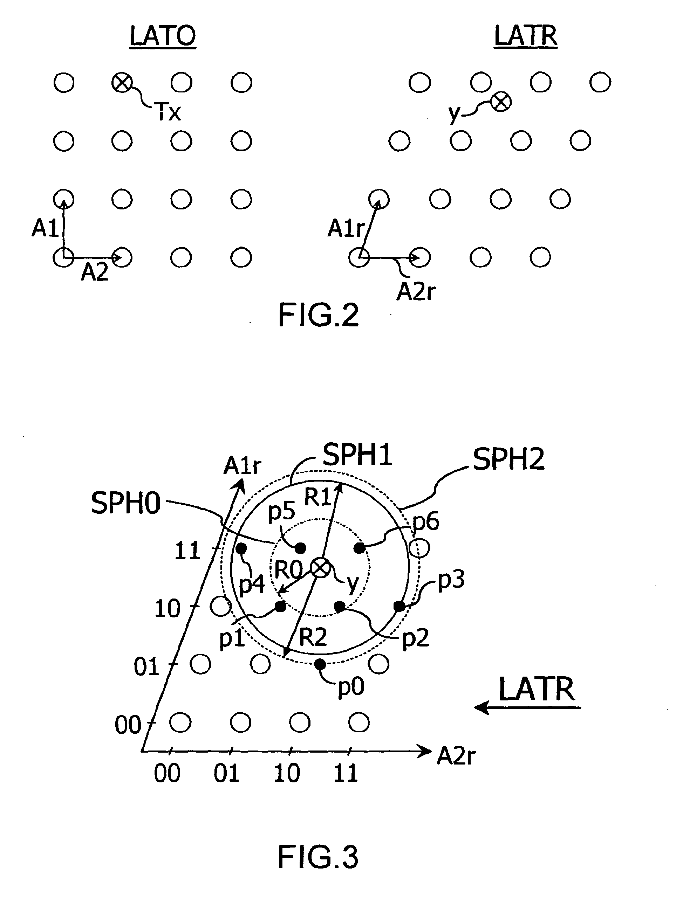

Fig.2 shows in two dimensions an original lattice constellation LATO constituted by symbols which may be transmitted by a transmitter as described above, and a second lattice constellation LATR constituted by symbols which may potentially be received by means of a receiver as described above. The original lattice constellation LATO is defined by a first basic vector system (A1, A2), the second lattice constellation LATR being defined by a second basic vector system (A1r, A2r), which is usually different from the first one because of channel communication conditions affecting signals exchanged between the transmitter and the receiver. Moreover, it appears that though a transmitted symbol Tx is by nature located on a point of the original lattice constellation LATO, a corresponding received symbol y is usually not located on a point of the second lattice constellation LATR because of noise affecting the communication channels established between the transmitter and the receiver.

If Y is a vector representative of the received symbol y, B a vector representative of a symbol originally transmitted, C a matrix representative of the channel or channels through which said symbol has been transmitted and N a vector representative of the noise affecting said communication channel or channels, the above explanations may be mathematically expressed by the equation: Y=C.B+N

Symbol decoding means at the receiver end are intended to provide a list of estimated symbols belonging to the second lattice constellation LATR, which estimated symbols may represent the transmitted symbol Tx. A metric representing the distance between the received symbol y and a given estimated symbol of the lattice constellation may be computed in order to provide a probability value associated with said estimated symbol. In order to limit the extent of the search for such estimated symbols, only the most likely symbols of the second lattice constellation LATR are to be examined, i.e. those symbols who are the closest to the received symbol y.

Fig.3 shows how such a limitation of the search for estimated symbols may be performed advantageously thanks to a particular listing scheme, according to which only those symbols pj (for j=1 to 6) which are included in a sphere SPH1 having a predetermined radius R1 will be included in the list produced in the course of the symbol listing step.

In such a symbol listing step, the sphere SPH1 may either be centered on the received symbol y, as is the case in the embodiment of the invention shown here, or may also be centered on a particular symbol of the lattice constellation LATR, which symbol will previously have been identified as being the most likely representative of the received symbol y.

The inventors have observed that situations may occur, in which all listed symbols produced by the symbol listing step are such that at least one of the bits representing the listed symbols is invariant from any one listed symbol to another.

Such will be the case, in the example depicted here, if p1 is represented by 1001, p2 by 1010, p3 by 1011, p4 by 1100, p5 by 1101, and p6 by 1110, in which case a first bit c0 of a set {c0, c1, c2, c3} of four bits ck (for k=0 to 3) representing all six listed symbols represented by the points pj (for j=1 to 6) is invariant and equal to "1".

In other terms, the probability for this bit c0 to have its actual value "1" will be automatically set to 1 at the end of the marginalization step, the probability for this bit c0 to have another value, e.g. "0" being then conversely set to 0. Such an integer probability value will be a non-refineable hard value, indicative of an irrevocable decision and likely to disturb the iterative interpreting process and to cause decoding errors.

A same conclusion would apply to a list of symbols generated by means of another sphere SPH0 having a smaller radius R0, though it is understandable that such a smaller sphere will offer a smaller amount of statistical information. A non-approximated probability value associated with the bit c0 of symbols located within this smaller sphere SPH0 will thus be smaller, for example of the order of 0,9, than a non-approximated probability value associated with the bit c0 of symbols located within the greater sphere SPH1, which could for example be of the order of 0,999.

The invention aims at preventing integer probability values from appearing in the course of the marginalization step, and thus at preventing such integer probability values from producing significant adverse effects on the iterative interpreting process, by allowing to tune the radius of the sphere used for identifying the symbols to be included in the list of symbols in such a way that said sphere is large enough for encompassing symbols featuring different values for all bits representing said symbols, which should be achieved by virtue of the invention by setting said sphere radius so that the probability value associated with bit c0 which would be invariant among symbols included in spheres SPH0 and SPH1 will be non-integer and greater than a predetermined probability threshold.

According to a first embodiment of the invention, the symbols to be selected will be included in a sphere SPH2 having a radius R2 whose value is chosen essentially equal to $dc^2+2.\sigma^2.\ln[(1/\varepsilon)-1]$, where dc represents a distance which may separate the center of the sphere from a symbol previously identified as most likely representative of the transmitted symbol, $\sigma^2$ representing a noise variance and $(1-\varepsilon)$ the probability threshold.

This embodiment of the invention ensures that at least one symbol for which the bit c0 will be equal to 0, which symbol will usually be virtual but coincides with point p0 in the example depicted here, will be located at the surface of the sphere SPH2 and thus included in the list generated by the symbol listing means.

Indeed, the inventors have observed that, in a situation such as the one described above, the most likely representative of the transmitted symbol, which corresponds in this example to the point p5, is the main contributor to the *a posteriori* probability value p(c0=1|y), which *a posteriori* probability value may thus be considered proportional to $e^{-dc^2/2.\sigma^2}$. Conversely, since it is supposed that the only listed point for which c0 is equal to 0 is at the very limit of the sphere SPH2, i.e. at its surface, the *a posteriori* probability value p(c0=0|y) may thus be considered proportional to $e^{-R2^2/2.\sigma^2}$.

The invention enables to define the sphere SPH2 so that the *a posteriori* probability value p(c0=1|y) will have a non-integer value, i.e. be equal to $1-\varepsilon$, $\varepsilon$ being a non-integer value and defined in the above-mentioned programmable listing parameters Lpr, for example $\varepsilon=10^{-5}$ or $10^{-6}$. It is thus possible to express p(c0=1|y) = $1-\varepsilon$ as $(e^{-dc^2/2.\sigma^2})/[(e^{-dc^2/2.\sigma^2})+(e^{-R2^2/2.\sigma^2})]$, since p(c0=1|y)+ p(c0=0|y)=1 by virtue of the very definition of an *a posteriori* probability value, all *a priori* probability values being set to 1/2 during the first iteration of the interpreting process described above.

The above explanation may be transposed to a case in which the sphere would be defined so as to include Ni virtual points for which c0=1 and which would be located at a distance dc from the center of the sphere, which sphere would have, located at its surface, No virtual points for which c0=0, the numbers Ni and No being included in the above-mentioned programmable listing parameters Lpr.

The radius of such a sphere, not depicted here because of the complexity a corresponding drawing would have, would then be chosen essentially equal to $dc^2+2.\sigma^2.\ln[(Ni/No).((1/\varepsilon)-1)]$.

In the particular embodiment of the invention shown in Fig.1, the above-described receiver REC further includes :

. integer refined probability detection means IPDM for detecting, during an integer refined probability detection step, situations in which at least one refined probability value Exd(ck) produced by the decoding step DS is an integer value, and

. thresholding means IRRM for replacing, during a thresholding step, such an integer refined probability value Exd (ck) by a predetermined non-integer threshold value Sxd(ck).

The threshold value Sxd(ck) may for example be chosen equal to $1-\delta$ if the refined probability value Exd(ck) is equal to 1 and equal to $\delta$ if the refined probability value Exd(ck) is equal to 0, where $\delta$ is a predetermined non-integer value chosen lower than ½, for example $\delta=10^{-5}$ or $10^{-6}$.

This is represented by means of a multiplexer MX intended to output either the refined probability value Exd (ck) if it has been recognized as a non-integer value by the detection means IPDM (N=1), or the threshold value Sxd (ck) if the refined probability value Exd(ck) has been recognized as an integer value by the detection means IPDM (N=0).

It should be noted here that such a structure of the thresholding means IRRM may also be used for constructing the substitution means mentioned in reference with Fig. 1 and not shown on said Fig.1.

The inventors have observed that the decoding means DM intended to carry out the decoding step may sometimes output an integer refined probability value, even if all probability values provided to said decoding means are of a non-integer nature. Such situations may occur due to approximations which will be made during the computational process leading to the refined probability values. As already explained above, a refined probability value Exd(ck) equal to 0 or to 1 would have an adverse impact on the performance of the iterative interpreting process and lead to errors in the interpretation, which is prevented in this embodiment of the invention thanks to the integer refined probability detection means IPDM and to the thresholding means IRRM.

Though the above description relates to the operation of a receiver in a MIMO telecommunication system, it should be understood that the present invention may be advantageously employed in any kind of telecommunication system in which the identification of a transmitted symbol involves an iterative interpreting process intended to solve an equation of the type: Y=C.B+N, where Y is a vector representative of the received symbol y, B a vector representative of a symbol originally transmitted, C a matrix representative of the channel or channels through which said symbol has been transmitted and N a vector representative of the noise affecting said communication channel or channels.

**Claims**

1. A method for interpreting at least one signal transmitted by means of at least one transmitting antenna and received by means of at least one receiving antenna, which method includes:

   . a symbol listing step for producing a list of symbols selected among predetermined symbols which may potentially be received by means of said at least one receiving antenna, each listed symbol being represented by at least one bit,
   . a marginalization step for processing said listed symbols in order to produce at least one probability value to be associated to said at least one bit, and
   . a decoding step for refining said at least one probability value by taking into account knowledge pertaining to an encoding scheme used for encoding the received signal, a refined probability value produced in the course of the decoding step being intended to be used as an *a priori* probability value during a subsequent marginalization step,

   the method being **characterised in that** the symbol listing step involves defining a radius value of a sphere intended to encompass the symbols to be listed, which radius value is chosen such that at least one probability value associated with at least one bit which is invariant among selected symbols located within said sphere is non-integer and greater than a predetermined probability threshold.

2. A method as claimed in claim 1, **characterized in that** the selected radius value R is chosen essentially equal to $dc^2+2.\sigma^2.\ln[(1/\varepsilon)-1]$, where dc represents a distance which may separate the center of the sphere from a symbol previously identified as most likely representative of the transmitted symbol, $\sigma^2$ representing a noise variance and $(1-\varepsilon)$ the probability threshold.

3. A method as claimed in claim 1, **characterized in that** the selected radius value R is chosen essentially equal to $dc^2+2.\sigma^2.1n[(Ni/No).((1/\varepsilon)-1)]$, where dc represents a distance which may separate the center of the sphere from a symbol previously identified as most likely representative of the transmitted symbol, $\sigma^2$ representing a noise variance and $(1-\varepsilon)$ the probability threshold, Ni representing a number of virtual symbols also separated from the center of the sphere of radius R by a distance dc, and No representing a number of virtual symbols located at the surface of said sphere.

4. A method as claimed in any one of claims 1 to 3, further including a substitution step for substituting a predetermined non-integer substitution value for an integer probability value associated to a bit which is invariant from any one symbol listed in said original list to another.

5. A method as claimed in claim 4, **characterized in that** the substitution value is equal to $1-\varepsilon$ if the integer probability value is 1 and equal to ε if the integer probability value is 0, where ε is a predetermined non-integer value chosen lower than 1/2.

6. A method as claimed in any one of claims 1 to 5, **characterized in that** it further includes :

. an integer refined probability detection step for detecting situations in which at least one refined probability value produced by the decoding step is an integer value, and
. a thresholding step for replacing such an integer refined probability value by a predetermined non-integer threshold value.

7. A method as claimed in claim 6, **characterized in that** the threshold value is equal to 1-δ if the integer refined probability value is 1 and equal to δ if the integer refined probability value is 0, where δ is a predetermined non-integer value chosen lower than ½.

8. A telecommunication system including at least one transmitter provided with at least one transmitting antenna and at least one receiver provided with at least one receiving antenna, which receiver includes:

symbol listing means (SLM) for producing a list of symbols selected among predetermined symbols which may potentially be received by means of said at least one receiving antenna, each listed symbol being represented by at least one bit,
. marginalization means (MGM) for processing said listed symbols in order to produce at least one probability value to be associated to said at least one bit, and
. decoding means (Chdec) for refining said at least one probability value by taking into account knowledge pertaining to an encoding scheme used for encoding the received signal, a refined probability value produced in the course of the decoding step being intended to be used as an *a priori* probability value during a subsequent marginalization step,

the telecommunication system being **characterized in that** the symbol listing means (SLM) are designed for computing a radius value of a sphere intended to encompass the symbols to be listed, which radius value is chosen such that at least one probability value associated with at least one bit which is invariant among symbols located within said sphere is non-integer and greater than a predetermined probability threshold.

9. A communication device provided with at least one receiving antenna and including:

. symbol listing means (SLM) for producing a list of symbols selected among predetermined symbols which may potentially be received by means of said at least one receiving antenna, each listed symbol being represented by at least one bit,
. marginalization means (MGM) for processing said listed symbols in order to produce at least one probability value to be associated to said at least one bit, and
. decoding means (Chdec) for refining said at least one probability value by taking into account knowledge pertaining to an encoding scheme used for encoding the received signal, a refined probability value produced in the course of the decoding step being intended to be used as an *a priori* probability value during a subsequent marginalization step,

which communication device is **characterized in that** the symbol listing means (SLM) are designed for computing a radius value of a sphere intended to encompass the symbols to be listed, which radius value is chosen such that at least one probability value associated with at least one bit which is invariant among symbols located within said sphere is non-integer and greater than a predetermined probability threshold.

**Patentansprüche**

1. Verfahren zum Interpretieren wenigstens eines Signals, das mittels wenigstens einer Sendeantenne gesendet wird und das mittels wenigstens einer Empfangsantenne empfangen wird, welches Verfahren Folgendes enthält:

. einen Symbol-Auflistungsschritt zum Erzeugen einer Liste von Symbolen, die unter vorbestimmten Symbolen ausgewählt sind, die potentiell mittels wenigstens einer Empfangsantenne empfangen werden können,

wobei jedes aufgelistete Symbol durch wenigstens ein Bit dargestellt wird,

. einen Marginalisierungsschritt zum Verarbeiten der aufgelisteten Symbole, um wenigstens einen Wahrscheinlichkeitswert zu erzeugen, um zu dem wenigstens einen Bit zu gehören, und

. einen Decodierschritt zum Verfeinern des wenigstens einen Wahrscheinlichkeitswerts unter Berücksichtigung eines Wissens in Bezug auf ein Codierschema, das zum Codieren des empfangenen Signals verwendet ist,

wobei ein im Verlauf des Decodierschritts erzeugter verfeinerter Wahrscheinlichkeitswert während eines nachfolgenden Marginalisierungsschritts als ein a-priori-Wahrscheinlichkeitswert verwendet werden soll,

wobei das Verfahren **dadurch gekennzeichnet ist, dass** der Symbol-Auflistungsschritt ein Definieren eines Radiuswerts einer Kugel enthält, die die aufzulistenden Symbole umfassen soll, welcher Radiuswert so ausgewählt wird, dass wenigstens ein Wahrscheinlichkeitswert, der zu wenigstens einem Bit gehört, das unter ausgewählten Symbolen invariant ist, die innerhalb der Kugel angeordnet sind, nicht ganzzahlig und größer als eine vorbestimmte Wahrscheinlichkeitsschwelle ist.

2. Verfahren nach Anspruch 1, **dadurch gekennzeichnet, dass** der ausgewählte Radiuswert R im Wesentlichen gleich $dc^2+2.\sigma^2.\ln[(1/\varepsilon)-1]$ ausgewählt wird, wobei dc einen Abstand darstellt, der die Mitte der Kugel von einem Symbol trennen kann, das zuvor als wahrscheinlichster Repräsentant des gesendeten Symbols identifiziert ist, $\sigma^2$ eine Rauschvarianz und $(1-\varepsilon)$ die Wahrscheinlichkeitsschwelle darstellt.

3. Verfahren nach Anspruch 1, **dadurch gekennzeichnet, dass** der ausgewählte Radiuswert R im Wesentlichen gleich $dc^2+2.\sigma^2.\ln[(Ni/No).((1/\varepsilon)-1)]$ ausgewählt wird, wobei dc einen Abstand darstellt, der die Mitte der Kugel von einem Symbol trennen kann, das zuvor als wahrscheinlichster Repräsentant des gesendeten Symbols identifiziert ist, $\sigma^2$ eine Rauschvarianz und $(1-\varepsilon)$ die Wahrscheinlichkeitsschwelle darstellt, Ni eine Anzahl virtueller Symbole darstellt, die auch von der Mitte der Kugel mit einem Radius R um einen Abstand dc getrennt sind, und No eine Anzahl virtueller Symbole darstellt, die an der Oberfläche der Kugel angeordnet sind.

4. Verfahren nach einem der Ansprüche 1 bis 3, das weiterhin einen Substitutionsschritt zum Substituieren eines vorbestimmten nicht ganzzahligen Substitutionswerts für einen ganzzahligen Wahrscheinlichkeitswert, der zu einem Bit gehört, das von irgendeinem in der ursprünglichen Liste aufgelisteten Symbol zu einem anderen invariant ist.

5. Verfahren nach Anspruch 4, **dadurch gekennzeichnet, dass** der Substitutionswert gleich $1-\varepsilon$ ist, wenn der ganzzahlige Wahrscheinlichkeitswert 1 ist, und gleich $\varepsilon$ ist, wenn der ganzzahlige Wahrscheinlichkeitswert 0 ist, wobei $\varepsilon$ ein vorbestimmter nicht ganzzahliger Wert ist, der kleiner als 1/2 ausgewählt ist.

6. Verfahren nach einem der Ansprüche 1 bis 5, **dadurch gekennzeichnet, dass** es weiterhin Folgendes enthält:

. einen Erfassungsschritt für eine ganzzahlige verfeinerte Wahrscheinlichkeit zum Erfassen von Situationen, in welchen wenigstens ein durch den Decodierschritt erzeugter verfeinerter Wahrscheinlichkeitswert ein ganzzahliger Wert ist, und

. einen Schwellenbildungsschritt zum Ersetzen eines solchen ganzzahligen verfeinerten Wahrscheinlichkeitswerts durch einen nicht ganzzahligen Schwellenwert.

7. Verfahren nach Anspruch 6, **dadurch gekennzeichnet, dass** der Schwellenwert gleich $1-\delta$ ist, wenn der ganzzahlige verfeinerte Wahrscheinlichkeitswert 1 ist, und gleich $\delta$ ist, wenn der ganzzahlige verfeinerte Wahrscheinlichkeitswert 0 ist, wobei $\delta$ ein vorbestimmter nicht ganzzahliger Wert ist, der kleiner als 1/2 ausgewählt ist.

8. Telekommunikationssystem mit wenigstens einem mit wenigstens einer Sendeantenne versehenen Sender und wenigsten einem mit wenigstens einer Empfangsantenne versehenen Empfänger, welcher Empfänger Folgendes enthält:

. eine Symbol-Auflistungseinrichtung (SLM) zum Erzeugen einer Liste von Symbolen, die unter vorbestimmten Symbolen ausgewählt sind, die potentiell mittels der wenigstens einen Empfangsantenne empfangen werden können, wobei jedes aufgelistete Symbol durch wenigstens ein Bit dargestellt ist,

. eine Marginalisierungseinrichtung (MGM) zum Verarbeiten der aufgelisteten Symbole, um wenigstens einen Wahrscheinlichkeitswert zu erzeugen, um zu dem wenigstens einen Bit zu gehören, und

. eine Decodiereinrichtung (Chdec) zum Verfeinern des wenigstens einen Wahrscheinlichkeitswerts unter Berücksichtigung eines Wissens in Bezug auf ein Codierschema, das zum Codieren des empfangenen Signals verwendet ist, wobei ein im Verlauf des Decodierschritts erzeugter verfeinerter Wahrscheinlichkeitswert während eines nachfolgenden Marginalisierungsschritts als ein a-priori-Wahrscheinlichkeitswert verwendet werden soll,

wobei das Telekommunikationssystem **dadurch gekennzeichnet ist, dass** die Symbol-Auflistungseinrichtung (SLM) zum Berechnen eines Radiuswerts einer Kugel entwickelt ist, die die aufzulistenden Symbole umfassen soll, welcher Radiuswert so ausgewählt ist, dass wenigstens ein Wahrscheinlichkeitswert, der zu wenigstens einem Bit gehört, das unter ausgewählten Symbolen invariant ist, die innerhalb der Kugel angeordnet sind, nicht ganzzahlig und größer als eine vorbestimmte Wahrscheinlichkeitsschwelle ist.

9. Kommunikationsvorrichtung, die mit wenigstens einer Empfangsantenne versehen ist und Folgendes enthält:

. eine Symbol-Auflistungseinrichtung (SLM) zum Erzeugen einer Liste von Symbolen, die unter vorbestimmten Symbolen ausgewählt sind, die potentiell mittels der wenigstens einen Empfangsantenne empfangen werden können, wobei jedes aufgelistete Symbol durch wenigstens ein Bit dargestellt ist,
. eine Marginalisierungseinrichtung (MGM) zum Verarbeiten der aufgelisteten Symbole, um wenigstens einen Wahrscheinlichkeitswert zu erzeugen, um zu dem wenigstens einen Bit zu gehören, und
. eine Decodiereinrichtung (Chdec) zum Verfeinern des wenigstens einen Wahrscheinlichkeitswerts unter Berücksichtigung eines Wissens in Bezug auf ein Codierschema, das zum Codieren des empfangenen Signals verwendet ist, wobei ein im Verlauf des Decodierschritts erzeugter verfeinerter Wahrscheinlichkeitswert während eines nachfolgenden Marginalisierungsschritts als ein a-priori-Wahrscheinlichkeitswert verwendet werden soll,

welche Kommunikationsvorrichtung **dadurch gekennzeichnet ist, dass** die Symbol-Auflistungseinrichtung (SLM) zum Berechnen eines Radiuswerts einer Kugel entwickelt ist, die die aufzulistenden Symbole umfassen soll, welcher Radiuswert so ausgewählt ist, dass wenigstens ein Wahrscheinlichkeitswert, der zu wenigstens einem Bit gehört, das unter ausgewählten Symbolen invariant ist, die innerhalb der Kugel angeordnet sind, nicht ganzzahlig und größer als eine vorbestimmte Wahrscheinlichkeitsschwelle ist.

## Revendications

1. Méthode pour interpréter au moins un signal transmis au moyen d'au moins une antenne de transmission et reçu au moyen d'au moins une antenne de réception, ladite méthode incluant :

- une étape de listage de symboles pour produire une liste de symboles choisis parmi des symboles prédéterminés qui peuvent potentiellement être reçus au moyen d'au moins une antenne de réception, chaque symbole listé étant représenté par au moins un bit,
- une étape de marginalisation pour traiter lesdits symboles listés afin de produire au moins une valeur de probabilité à associer à l'au moins dit bit, et
- une étape de décodage pour affiner l'au moins dite valeur de probabilité en tenant compte de la connaissance concernant un schéma d'encodage utilisé pour encoder le signal reçu, une valeur de probabilité affinée produite au cours de l'étape de décodage étant destinée à être utilisée en tant que valeur de probabilité *a priori* durant une étape de marginalisation subséquente,
- ladite méthode étant **caractérisée en ce que** l'étape de listage de symboles implique de définir une valeur de rayon d'une sphère destinée à contenir les symboles à lister, ladite valeur de rayon étant choisie de manière qu'au moins une valeur de probabilité associée avec l'au moins dit bit, qui est un variant parmi les symboles choisis logés à l'intérieur de ladite sphère soit un nombre non entier supérieur à un seuil de probabilité prédéterminé.

2. Méthode selon la revendication 1 **caractérisée en ce que** la valeur de rayon choisie R est choisie essentiellement égale à $dc^2+2.\sigma^2.1n[(1/\varepsilon)-1]$, où de représente une distance qui peut séparer le centre de la sphère d'un symbole précédemment identifié comme le représentant le plus probable du symbole transmis, $\sigma^2$ représentant une variance de bruit et $(1-\varepsilon)$ le seuil de probabilité.

3. Méthode selon la revendication 1, **caractérisée en ce que** la valeur de rayon choisie R est choisie essentiellement égale à $dc^2+2.\sigma^2.\ln[(Ni/No).((1/\varepsilon)-1)]$, où de représente une distance qui peut séparer le centre de la sphère d'un symbole précédemment identifié comme représentant le plus probable du symbole transmis, $\sigma^2$ représentant une

variance de bruit et (1-ε) le seuil de probabilité, Ni représentant un nombre de symboles virtuels aussi séparé du centre de la sphère de rayon R par une distance de et No représentant un nombre de symboles virtuels logés à la surface de ladite sphère.

4. Méthode selon une des revendications 1 à 3, incluant de plus une étape de substitution pour substituer une valeur de substitution non entière prédéterminée pour une valeur de probabilité entière associée à un bit qui est invariant à partir de n'importe quel symbole listé dans ladite liste originale jusqu'à un autre.

5. Méthode selon la revendication 4, **caractérisée en ce que** la valeur de substitution est égale à 1-ε si la valeur de probabilité entière est 1 et est égale à ε si la valeur de probabilité entière est 0, ε étant une valeur non entière prédéterminée choisie inférieure à ½.

6. Méthode selon une des revendications 1 à 5, **caractérisée en ce qu'**elle comprend de plus :

   - une étape de détection de la probabilité affinée entière pour détecter les situations dans lesquelles au moins une valeur de probabilité affinée produite par l'étape de décodage est une valeur entière, et
   - une étape de seuillage pour remplacer une telle valeur de probabilité affinée entière par une valeur de seuil non entière prédéterminée.

7. Méthode selon la revendication 6, **caractérisée en ce que** la valeur de seuil est égale à 1-δ si la valeur de probabilité affinée entière est 1 et est égale à δ si la valeur de probabilité affinée entière est 0, δ étant une valeur non entière prédéterminée choisie inférieure à ½.

8. Système de télécommunication incluant au moins un émetteur prévu avec au moins une antenne d'émission et au moins un récepteur prévu avec au moins une antenne de réception, ledit récepteur incluant :

   - des moyens de listage de symboles (SLM) pour produire une liste de symboles choisis parmi des symboles prédéterminés qui peuvent potentiellement être reçus au moyen de l'au moins dite antenne de réception, chaque symbole listé étant représenté par au moins un bit,
   - des moyens de marginalisation (MGM) pour traiter lesdits symboles listés afin de produire au moins une valeur de probabilité à associer à l'au moins dit bit, et
   - des moyens de décodage (Chdec) pour affiner l'au moins dite valeur de probabilité en tenant compte de la connaissance concernant un schéma d'encodage utilisé pour encoder le signal reçu, une valeur de probabilité affinée produite au cours de l'état de décodage étant destinée à être utilisée en tant que valeur de probabilité *a priori* durant une étape de marginalisation subséquente,
   - le système de télécommunication étant **caractérisé en ce que** les moyens de listage de symboles (SLM) sont prévus pour calculer une valeur du rayon d'une sphère destinée à contenir des symboles à lister, la valeur de rayon étant choisie de manière qu'au moins ladite valeur de probabilité associée à l'au moins dit bit est un avariant parmi les symboles logés à l'intérieur de ladite sphère et non entière et plus grand qu'un seuil de probabilité prédéterminé.

9. Un dispositif de communication muni d'au moins une antenne de réception et incluant :

   - des moyens de listage de symboles (SLM) pour produire une liste de symboles choisis parmi des symboles prédéterminés qui peuvent potentiellement être reçus au moyen de l'au moins dite antenne de réception, chaque symbole listé étant représenté par au moins un bit,
   - des moyens de marginalisation (MGM) pour traiter lesdits symboles listés afin de produire au moins une valeur de probabilité à associer à l'au moins dit bit, et
   - des moyens de décodage (Chdec) pour affiner l'au moins dite valeur de probabilité en tenant compte de la connaissance concernant un schéma d'encodage utilisé pour encoder le signal reçu, une valeur de probabilité affinée produite au cours de l'état de décodage étant destinée à être utilisée en tant que valeur de probabilité *a priori* durant une étape de marginalisation subséquente,
   - le système de télécommunication étant **caractérisé en ce que** les moyens de listage de symboles (SLM) sont prévus pour calculer une valeur du rayon d'une sphère destinée à contenir des symboles à lister, la valeur de rayon étant choisie de manière qu'au moins ladite valeur de probabilité associée à l'au moins dit bit est un avariant parmi les symboles logés à l'intérieur de ladite sphère et non entière et plus grand qu'un seuil de probabilité prédéterminé.

# SYST

Uncb → **CHENC** → Tb → **INTL** → Pb → **MAPMD** → Zi → **SPTENC**

$(ta_1, ta_2 \ldots ta_{Nt})$ →

TR

## FIG.1

CHNL

$(ra_1, ra_2 \ldots ra_{Nr})$ →

Decb ← **CHDEC** ← PrV (ck) ← **DINTL** ← PrIV (ck) ← MGM — LoS [pj] — SLM

SPTDEC

N — IPDM — Y — IRRM — Sxd(ck) — MX

Exd(ck)

**INTR** — Pra (ck)

DET — Lpr

REC

EP 1 545 039 B1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1215839 A1

- EP 1221773 A1